# FASCICULE DE BREVET EUROPEEN

(11) **EP 1 687 828 B1**
(45) Date de publication et mention de la délivrance du brevet: **29.07.2009**
(21) Numéro de dépôt: 04805554.5
(22) Date de dépôt: 25.11.2004
(51) Int. Cl.: G21C 3/326

(54) **ASSEMBLAGE DE COMBUSTIBLE POUR REACTEUR NUCLEAIRE A EAU PRESSURISEE CONTENANT DE L'URANIUM ENRICHI ET NE CONTENANT PAS DE PLUTONIUM**
BRENNSTOFFBAUGRUPPE FÜR EINEN DRUCKWASSER-KERNREAKTOR MIT PLUTONIUMFREIEM ANGEREICHERTEM URAN
FUEL ASSEMBLY FOR A PRESSURISED WATER NUCLEAR REACTOR CONTAINING PLUTONIUM-FREE ENRICHED URANIUM

(30) Priorité: 27.11.2003 FR 0313950
(43) Date de publication de la demande: 09.08.2006
(73) Titulaire: Areva NP, 92400 Courbevoie (FR)
(72) Inventeur: BOUFFIER, Marcel, F-69970 Chaponnay (FR)
(74) Mandataire: Domenego, Bertrand
(86) Numéro de dépôt international: PCT/FR2004/003025
(87) Numéro de publication internationale: WO 2005/055246

(56) Documents cités:
- EP-A- 0 094 255
- EP-A- 0 196 655
- WO-A-96/20484
- WO-A-98/14957
- FR-A- 2 693 023
- PATENT ABSTRACTS OF JAPAN vol. 1996, no. 08, 30 août 1996 (1996-08-30) & JP 08 086894 A (NUCLEAR FUEL IND LTD), 2 avril 1996 (1996-04-02)
- PATENT ABSTRACTS OF JAPAN vol. 1998, no. 05, 30 avril 1998 (1998-04-30) & JP 10 002980 A (HITACHI LTD), 6 janvier 1998 (1998-01-06)

## Description

La présente invention concerne un assemblage de combustible pour réacteur nucléaire à eau pressurisée, du type comprenant des crayons de combustible disposés aux noeuds d'un réseau sensiblement régulier à contour extérieur polygonal, les crayons de combustible contenant de l'uranium enrichi en isotope 235 et ne contenant pas de plutonium avant utilisation de l'assemblage en réacteur.

L'invention s'applique donc à des assemblages destinés aux réacteurs à eau pressurisée (REP), par opposition aux réacteurs à eau bouillante (REB), et dont le combustible nucléaire est de l'uranium enrichi en isotope 235.

Ces assemblages sont généralement dénommés assemblages UO₂, par référence à la nature de leur combustible.

Ce terme UO₂ est employé par opposition aux assemblages à combustible à oxyde mixte d'uranium et de plutonium, généralement dénommés assemblages MOx.

De tels assemblages MOx permettent de réutiliser le plutonium provenant du retraitement d'assemblages UO₂. Le document FR-2 693 023 décrit un tel assemblage MOx. Les assemblages UO₂ et les assemblages MOx ont des comportements neutroniques différents. Pour permettre malgré cela le chargement simultané d'assemblages MOx et UO₂ dans un même réacteur, ce document a proposé d'utiliser dans les assemblages MOx des crayons à teneur en plutonium différentes. On parle alors d'assemblages MOx « zonés », puisque ces assemblages comprennent des zones dans lesquelles les crayons ont des teneurs en plutonium différentes.

EP-196 655 décrit par référence à sa figure 6 un assemblage pour réacteur à eau pressurisée, où la couche périphérique de crayons a une réactivité réduite par rapport à un groupe central de crayons. La nature du combustible n'est pas précisée.

Comme on l'a déjà indiqué plus haut, la présente invention ne concerne pas les assemblages MOx mais s'applique aux assemblages UO₂ qui ne présentent pas de tels zonages, l'enrichissement en isotope 235 y étant uniforme. On connaît il est vrai, par exemple de Ex-799 484, des assemblages UO₂ dont quelques crayons isolés sont empoisonnés en gadolinium et ont un enrichissement en uranium 235 inférieur à celui des crayons voisins. Toutefois, il ne s'agit pas d'assemblages zonés à proprement parler.

Classiquement un assemblage UO₂ comprend un squelette de maintien des crayons de combustible aux noeuds d'un réseau régulier qui est habituellement à base carrée. Le squelette comprend un embout inférieur, un embout supérieur, des tubes-guides reliant les deux embouts et des grilles de maintien des crayons de combustible.

Au sein du coeur d'un réacteur nucléaire à eau pressurisée, les assemblages UO₂ sont disposés les uns à côté des autres avec un léger espacement latéral de l'ordre de 2 mm. Cet espacement permet notamment le soulèvement et l'abaissement des assemblages lors des opérations de chargement et de déchargement du coeur.

L'eau de réfrigération et de modération circule dans les interstices résultant de cet espacement et y forme des lames d'eau.

La hauteur de tels assemblages est importante et peut atteindre trois ou quatre mètres. Du fait des tolérances de fabrication, l'épaisseur réelle des lames d'eau pourrait, au moins localement, être différente de l'épaisseur nominale de 2 mm.

En outre, les assemblages placés en réacteur pourraient théoriquement se déformer du fait de l'irradiation pour atteindre par exemple des formes en C, en S ou en W.

De telles déformations poseraient de nombreux problèmes. En fonctionnement, elles prendraient plus difficile l'insertion des grappes de commande et d'arrêt du réacteur nucléaire dans les tubes-guides.

En manutention, ces déformations augmenteraient les risques d'accrochage entre les assemblages, par exemple lors des opérations de chargement du coeur du réacteur.

Ainsi, le comportement réel des assemblages UO₂ pourrait, au moins mécaniquement, être différent de celui souhaité.

Un but de l'invention est de résoudre ce problème en fournissant un assemblage du type précité qui permette de réduire les risques, d'origine mécanique, de déviation du comportement de l'assemblage par rapport à son comportement souhaité.

A cet effet, l'invention a pour objet un assemblage selon la revendication 1.

Les revendications dépendantes 2 à 9 portent sur des caractéristiques facultatives de l'assemblage.

L'invention a également pour objet un coeur de réacteur nucléaire selon la revendication 10.

L'invention va mieux être comprise à la lecture de la description qui va suivre, donnée uniquement à titre d'exemple, et faite en se référant aux dessins annexés, sur lesquels :
- la figure 1 est une vue schématique de dessus illustrant un quart du coeur d'un réacteur nucléaire selon l'invention,
- la figure 2 est une vue schématique en plan montrant la répartition des crayons de combustible dans l'un des assemblages de combustible du coeur de la figure 1,
- les figures 3A et 3B sont des diagrammes illustrant la répartition de puissance respectivement dans un assemblage selon l'état de la technique et dans l'assemblage de la figure 2 pour une épaisseur de lame d'eau de 2 mm,
- les figures 4A et 4B sont des vues analogues aux figures 3A et 3B pour une épaisseur de lame d'eau de 7 mm,
- les figures 5A et 5B sont des vues analogues aux figures 3A et 3B pour des lames d'eau d'épaisseur de 12 mm, et
- la figure 6 est une vue analogue à la figure 2 illustrant une variante de l'invention.

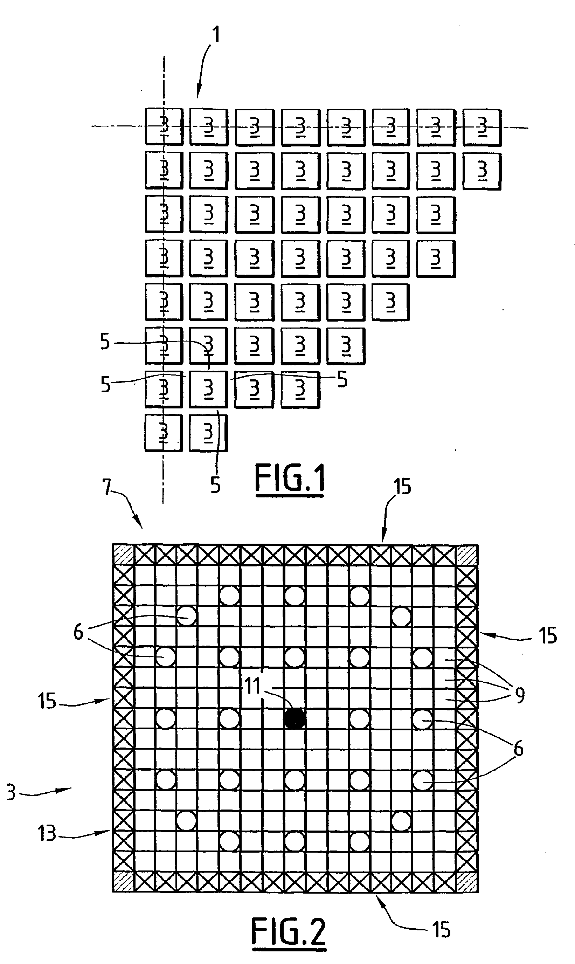

La figure 1 illustre un quart du coeur 1 d'un réacteur nucléaire à eau pressurisée (REP). Ce réacteur est donc refroidi et modéré par de l'eau sous pression. Classiquement, le coeur 1 présente une symétrie d'ordre 4, les axes de symétrie étant représentés en traits mixtes.

Le coeur 1 comprend des assemblages de combustible 3 disposés les uns à côté des autres avec un espacement latéral entre eux. Il en résulte, entre les assemblages 3, des interstices qui sont remplis par l'eau de réfrigération et de modération. Ainsi, les assemblages 3 sont bordés latéralement par des lames d'eau 5 qui s'étendent sur toute la hauteur des assemblages 3.

Typiquement, l'épaisseur nominale de ces lames d'eau 5 est de 2 mm.

Les assemblages 3 sont des assemblages UO₂ avec pour combustible nucléaire de l'uranium enrichi en isotope 235. Le combustible des assemblages 3 ne contient donc pas de plutonium avant leur utilisation dans le coeur 1.

La structure générale des assemblages 3 est classique et ne sera donc pas décrite en détail. On rappellera simplement que chaque assemblage 3 comprend des crayons de combustible et un squelette de support et de maintien de ces crayons aux noeuds d'un réseau sensiblement régulier.

Dans l'exemple de la figure 2, le réseau régulier est à base carrée et a un contour extérieur carré.

Le squelette comprend classiquement un embout inférieur, un embout supérieur et des tubes-guides 6 qui relient ces deux embouts et qui sont destinés à recevoir les crayons d'une grappe de commande du fonctionnement du coeur 1.

Le squelette comprend en outre des grilles 7 de maintien des crayons de combustible aux noeuds du réseau régulier. Ces grilles 7 comprennent classiquement des jeux de plaquettes entrecroisées qui délimitent entre elles des cellules 9 centrées sur les noeuds du réseau régulier. Chaque cellule 9 est destinée à recevoir un crayon de combustible ou un tube-guide 6, la cellule centrale 9 recevant quant à elle un tube d'instrumentation 11.

Dans l'exemple de la figure 2, les grilles de maintien 7 comprennent 17 cellules 9 par côté. Le contour extérieur du réseau est donc un carré de 17 cellules de côté. Dans d'autres variantes, le nombre de cellules 9 peut être différent, par exemple de 14x14 ou de 15x15.

Les crayons de combustible sont répartis en trois groupes, à savoir :
- un premier groupe central dont les crayons occupent les cellules 9 représentées vides sur la figure 2,
- un deuxième groupe de crayons de côtés qui occupent les cellules 9 marquées d'une croix sur la figure 2, et
- un troisième groupe de crayons de coins qui occupent les cellules 9 hachurées sur la figure 2.

Dans l'exemple représenté, le premier groupe comprend 200 crayons de combustible. Ce premier groupe occupe tout le réseau de crayons, sauf la couche périphérique 13 de crayons.

Ce premier groupe correspond donc à un carré de 15 cellules de côté, dont 25 cellules 9 sont occupées par les tubes-guides 6 et le tube d'instrumentation 11.

Les crayons de ce premier groupe contiennent comme combustible nucléaire de l'uranium enrichi en isotope 235 avec un premier enrichissemente e1. Ce premier enrichissement e1 est d'environ 4,11%. Cet enrichissement est défini comme étant le rapport massique de l'isotope U235 et de la totalité de l'uranium présent dans le combustible nucléaire de ces crayons.

Le deuxième groupe de crayons comprend 60 crayons répartis sur les quatre faces 15 de la couche périphérique 13.

Plus précisément, pour chaque face extérieure 15 du réseau de crayons de combustible, les 15 crayons situés entre les deux crayons de coins de la face 15 considérée appartiennent au deuxième groupe.

Les crayons de combustible du deuxième groupe contiennent comme combustible nucléaire de l'uranium enrichi en isotope 235 avec un deuxième enrichissement e2. Ce deuxième enrichissement e2 en uranium 235 est d'environ 3,7%.

Le troisième groupe comprend 4 crayons qui occupent les coins extérieurs du réseau de crayons de combustible, c'est-à-dire les coins de la couche périphérique 13. Le combustible nucléaire des crayons du troisième groupe a un troisième enrichissement e3 en uranium 235 d'environ 2,8%.

Ainsi, chaque face 15 de la couche périphérique 13 comprend à ses deux extrémités deux crayons du troisième groupe et comprend pour le reste des crayons du deuxième groupe. Le reste du réseau est occupé par des crayons du premier groupe. Les crayons de la couche périphérique 13, qui s'étend continûment sur le pourtour de l'assemblage 3, ont donc des enrichissements plus faibles que les crayons au centre de l'assemblage.

Les crayons de combustible des premier, deuxième et troisième groupes qui ont des formes analogues mais des enrichissements différents en isotope 235, contiennent donc des masses différentes d'isotope 235.

L'assemblage 3 a ainsi, avant utilisation, une configuration « zonée » avec des crayons de coins présentant une faible réactivité nucléaire, des crayons situés le long des faces extérieures 15 entre les coins présentant une réactivité nucléaire intermédiaire, et les autres crayons, disposés au centre du réseau, qui possèdent une réactivité nucléaire élevée.

Comme cela va maintenant être exposé, un tel zonage permet de garantir un comportement neutronique individuel de l'assemblage 3 satisfaisant, même en présence de déviation de la géométrie réelle de l'assemblage 3 par rapport à sa géométrie nominale.

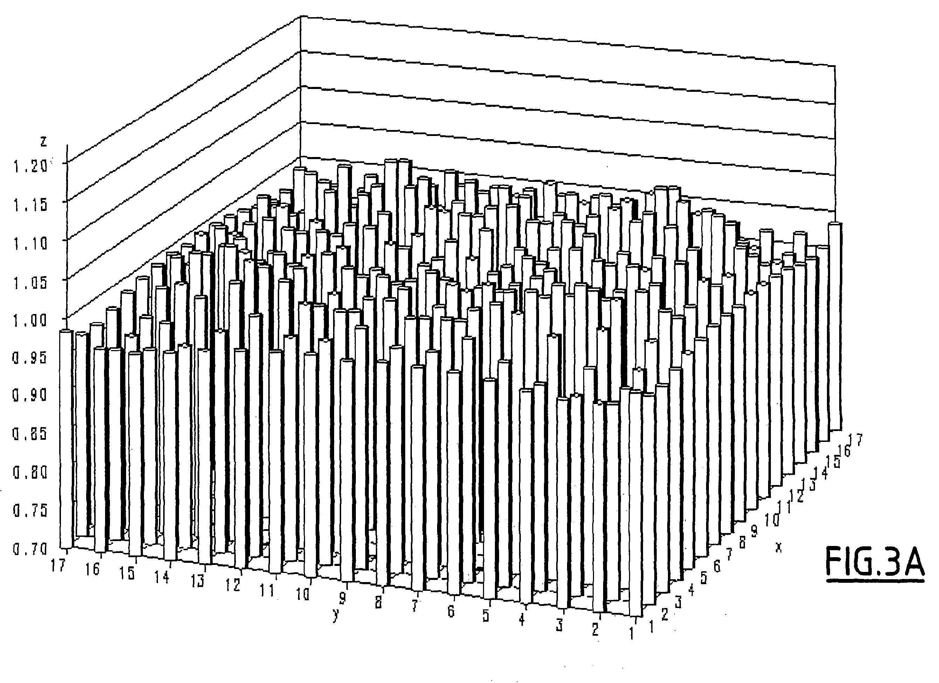

Ainsi, la figure 3A illustre la répartition de puissance linéique dans un assemblage de combustible à uranium enrichi en isotope 235 selon l'état de la technique, c'est-à-dire avec un enrichissement uniforme dans tous ses crayons. L'épaisseur des lames d'eau 5 environnant l'assemblage considéré est alors supposée homogène et égale à 2 mm, c'est-à-dire la valeur nominale. On notera que les valeurs de puissance en ordonnée ont été normalisées par rapport à la puissance linéique moyenne dans l'assemblage. Cette répartition de puissance a été calculée pour un épuisement de 150 MWj/t ce qui correspond à la période dans les cycles d'utilisation de l'assemblage dénommée « début de campagne équilibre Xénon ». C'est à ce moment que la distribution de puissance est supposée être la plus hétérogène.

Dans le cas de la figure 3A, la répartition de puissance est homogène et le facteur de forme, qui correspond au rapport de la puissance linéique maximale dans l'assemblage sur la puissance linéique moyenne au sein de l'assemblage est d'environ 1,053. La valeur du facteur de forme, proche de 1, confirme que la répartition de puissance est homogène et satisfaisante.

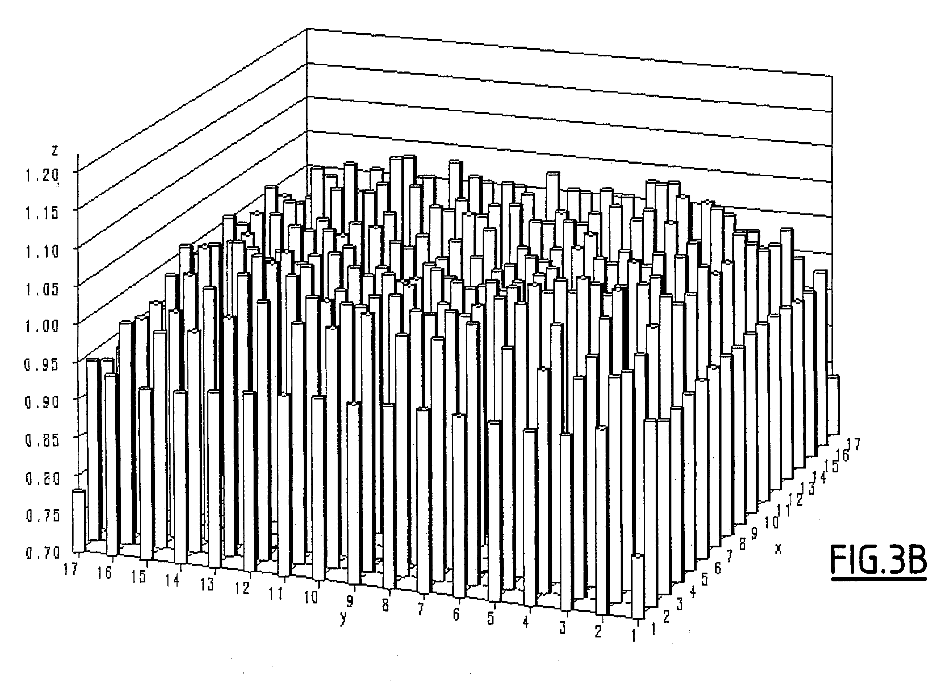

La figure 3B représente un diagramme analogue pour l'assemblage 3 de la figure 2. Comme on peut le constater sur cette figure, la puissance linéique des crayons du troisième groupe, c'est-à-dire aux coins de l'assemblage, est beaucoup plus faible que celle des crayons centraux du premier groupe, du fait de la faible réactivité nucléaire des crayons du troisième groupe. De même, la puissance linéique fournie par les crayons du deuxième groupe situés le long des faces extérieures 15 de l'assemblage 3 est comprise entre celle fournie par les crayons du premier groupe, c'est-à-dire au centre de l'assemblage 3, et celle fournie par les crayons du troisième groupe de crayons de coins.

Le facteur de forme vaut alors environ 1,068. Il est donc légèrement plus important que dans l'état de la technique. Toutefois, la valeur du facteur de puissance reste acceptable et l'assemblage 3 de la figure 2 convient tout à fait à une utilisation en réacteur.

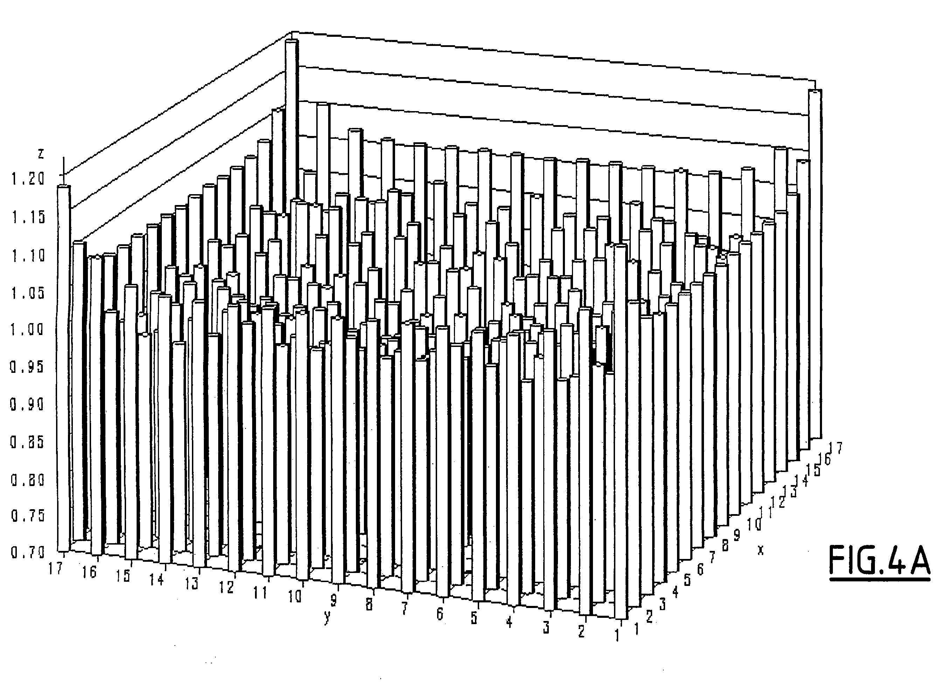

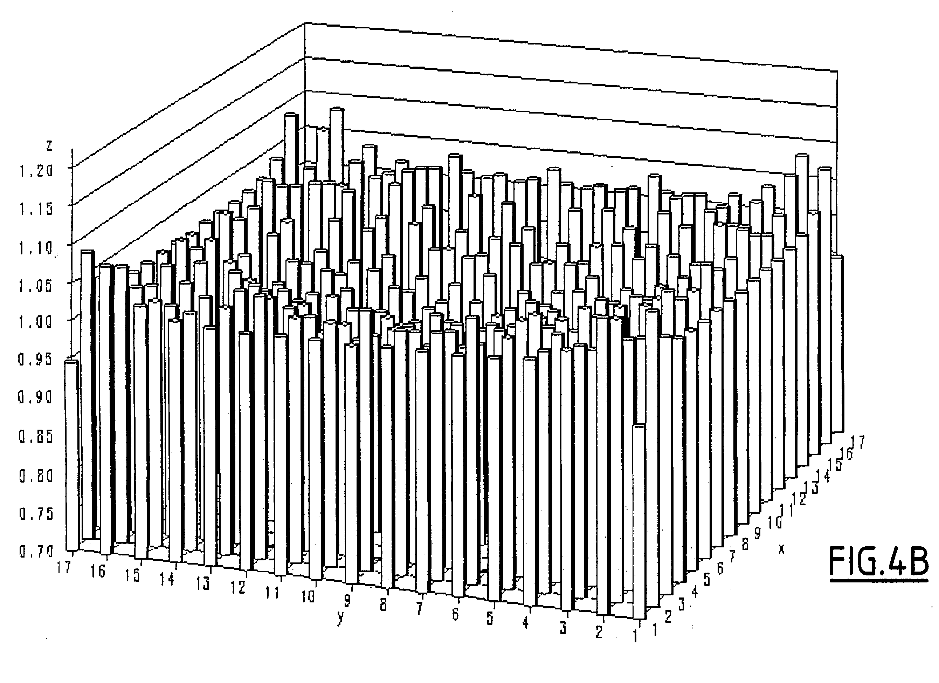

Les figures 4A et 4B correspondent aux figures 3A et 3B, mais avec des lames d'eau 5 d'une épaisseur homogène de 7 mm.

Comme on peut le constater, le facteur de forme augmente fortement dans le cas de l'assemblage selon l'état de la technique (figure 4A) pour atteindre une valeur de 1,186. La répartition de puissance est donc fortement hétérogène, ce qui doit être évité dans un coeur de réacteur nucléaire.

Cette constatation peut s'expliquer a posteriori par le fait que l'épaisseur plus importante d'eau au niveau des lames 5 freine plus fortement les neutrons de sorte que les crayons situés sur les côtés, et encore plus ceux situés dans les coins, sont plus exposés à des neutrons thermiques susceptibles de provoquer des fissions et donc d'engendrer de la puissance.

Comme on le voit sur la figure 4B, le zonage de l'assemblage 3 de la figure 2 permet de diminuer la puissance linéique aux coins de l'assemblage 3 et le long de ses faces extérieures 15 pour atteindre une distribution beaucoup plus homogène. Ainsi, le facteur de forme est ramené à une valeur de 1,078, ce qui est tout à fait satisfaisant.

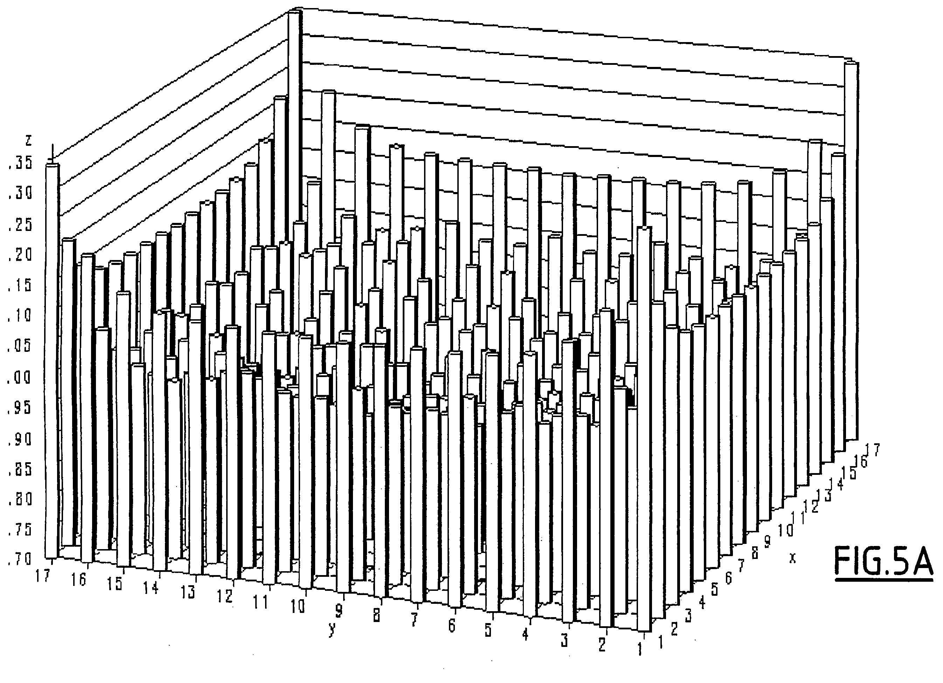

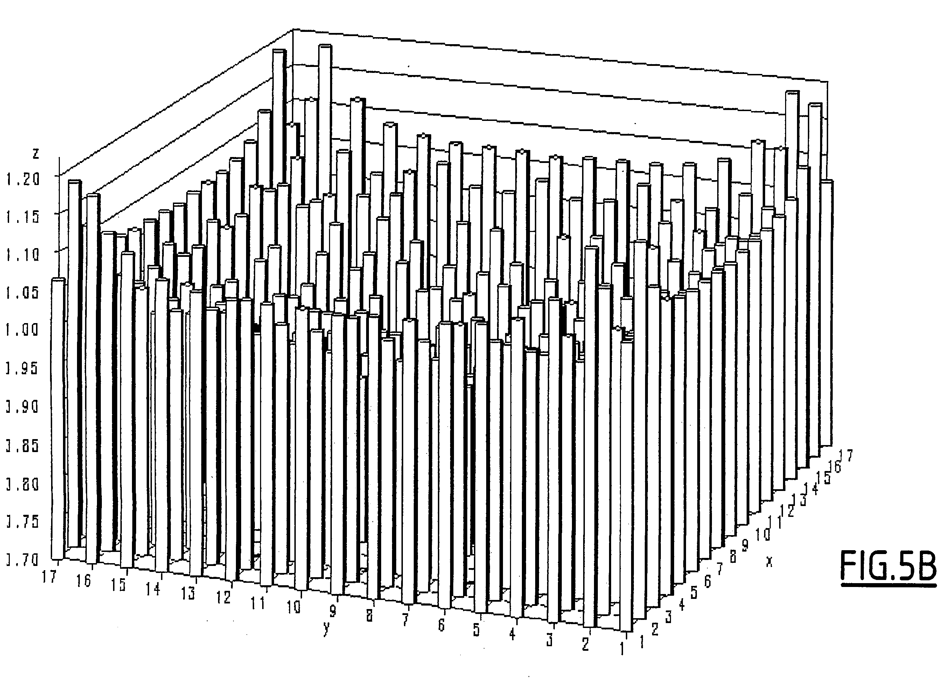

Le même phénomène peut être constaté pour une épaisseur homogène de lame d'eau 5 encore plus importante, par exemple de 12 mm comme illustré par les figures 5A et 5B. Ainsi, dans le cas d'un assemblage selon l'état de la technique, le facteur de forme est d'environ 1,342 tandis qu'il est d'environ 1,181 dans l'assemblage 3 de la figure 2.

L'adoption de la structure de l'assemblage 3 de la figure 2 permet donc de s'assurer que la distribution de puissance sera plus homogène au cas où les lames d'eau 5 auraient une épaisseur qui s'éloignerait de sa valeur nominale, ne serait-ce que localement, sans pour autant détériorer de manière significative cette distribution dans le cas où l'épaisseur des lames d'eau 5 correspondrait à la valeur nominale.

L'assemblage 3 de la figure 2 permet donc de réduire les conséquences neutroniques que pourraient avoir les déformations mécaniques des assemblages ou leurs tolérances de fabrication.

Dans certains cas, l'assemblage 3 peut également comprendre, en particulier dans son premier groupe, des crayons de combustible contenant un poison neutronique tel que du gadolinium. Les crayons concernés peuvent alors avoir un enrichissement en isotope 235 inférieur ou égal à celui du groupe auquel ils appartiennent.

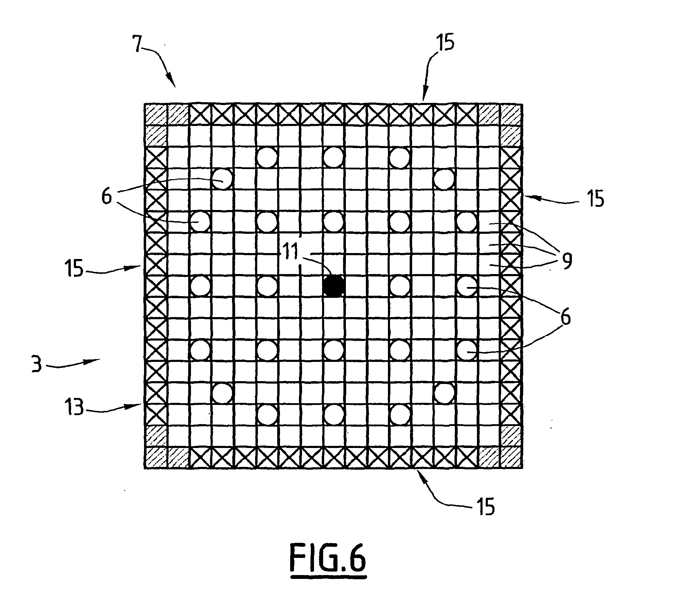

Dans une variante illustrée par la figure 6, le troisième groupe comprend, en plus des quatre crayons de coins, les huit crayons directement adjacents de la couche périphérique 13. Ainsi le troisième groupe de crayons comprend 12 crayons.

Toutefois, cette variante s'avère moins avantageuse car elle détériore de manière plus importante la répartition de puissance dans le cas où l'épaisseur des lames d'eau est égale à l'épaisseur nominale.

Dans les variantes préférées, le deuxième enrichissement e2 pourra être compris entre e1-0,8% et e1-0,2%, et le troisième enrichissement e3 entre e1-1,8% et e1-0,6%.

De préférence, le premier enrichissement e1 sera compris entre 3% et entre 6%.

Il est également possible, dans une variante qui ne fait pas partie de l'invention, que le deuxième et le troisième groupe soient constitués de crayons ayant le même enrichissement en isotope 235. En d'autres termes, e2 et e3 sont égaux. Les crayons de faible réactivité occupent alors toute la couche périphérique 13 et forme un groupe qui s'étend continûment à la périphérie de l'assemblage 3.

Dans encore une autre variante, les différentes réactivités nucléaires au sein des différents groupes de crayons de combustible peuvent être atteintes non pas avec des enrichissements différents en isotope 235 mais avec des diamètres différents de crayons de combustible, ce qui permet également d'atteindre des masses différentes d'isotope 235 dans les crayons des différents groupes.

Ainsi, les crayons du premier groupe ont un premier diamètre, les crayons de combustible du deuxième groupe un deuxième diamètre strictement inférieur au premier diamètre, et les crayons de combustible du troisième groupe un troisième diamètre inférieur ou égal au deuxième diamètre. Les masses d'isotope 235 contenues dans les crayons du premier, du deuxième et du troisième groupes sont donc inférieures les unes aux autres tout comme leurs réactivités nucléaires.

De manière plus générale, les crayons de combustible peuvent être disposés au sein de l'assemblage pour former un réseau à contour extérieur polygonal différent d'un carré.

## Revendications

1. Assemblage de combustible (3) pour réacteur nucléaire à eau pressurisée, du type comprenant des crayons de combustible disposés aux noeuds d'un réseau sensiblement régulier à contour extérieur polygonal, les crayons de combustible contenant de l'uranium enrichi en isotope 235 et ne contenant pas de plutonium avant utilisation de l'assemblage en réacteur, **caractérisé en ce que** les crayons sont distribués en au moins :
- un premier groupe central constitué de crayons de combustible ayant une première réactivité nucléaire (e1) et éventuellement de crayons contenant un poison neutronique, et
- une couche périphérique extérieure (13) de crayons de combustible qui sont distribués en :
• un deuxième groupe de crayons de combustible s'étendant le long des faces (15) du contour extérieur du réseau et ayant une deuxième réactivité nucléaire (e2) strictement inférieure à la première réactivité nucléaire, et
• un troisième groupe de crayons de combustible disposés aux coins du contour extérieur du réseau et ayant une troisième réactivité nucléaire (e₃) strictement inférieure à la deuxième réactivité nucléaire.

2. Assemblage selon la revendication 1, dans lequel le deuxième groupe s'étend, pour chaque face (15) du contour extérieur du réseau de crayons de combustible d'un coin à l'autre de la face considérée, et le troisième groupe ne comprend que les crayons de combustible disposés dans les coins du contour extérieur du réseau de crayons de combustible.

3. Assemblage selon l'une des revendications précédentes, dans lequel les réactivités nucléaires différentes des crayons de combustible des différents groupes sont obtenues par des masses différentes d'uranium 235 dans les crayons de combustible.

4. Assemblage selon la revendication 3, dans lequel les réactivités nucléaires différentes des crayons de combustible des différents groupes sont obtenues par des enrichissements différents (e1, e2, e3) des crayons de combustible en uranium 235.

5. Assemblage selon la revendication 1 ou 2 prise en combinaison avec la revendication 4, dans lequel :
- les crayons du premier groupe ont un premier enrichissement e1 en uranium 235,
- les crayons du deuxième groupe ont un deuxième enrichissement e2 en uranium 235 strictement inférieur au premier enrichissement e1, et
- les crayons du troisième groupe ont un troisième enrichissement en uranium 235 strictement inférieur au deuxième enrichissement e3.

6. Assemblage selon la revendication 5, dans lequel le deuxième enrichissement e2 est compris entre e1-0,8% et e1-0,2%.

7. Assemblage selon la revendication 5 ou 6, dans lequel le troisième enrichissement e3 est compris entre e1-1,8% et e1-0,6%.

8. Assemblage selon l'une des revendications 5 à 7, dans lequel le premier enrichissement e1 est compris entre 3% et 6%.

9. Assemblage selon l'une des revendications précédentes, dans lequel le réseau de crayons de combustible (3) a un contour extérieur carré.

10. Coeur de réacteur nucléaire, **caractérisé en ce qu'**il comprend des assemblages de combustible (3) selon l'une des revendications précédentes.

## Claims

1. A fuel assembly (3) for a pressurised water nuclear reactor of the type comprising fuel pencils disposed in the nodes of a substantially uniform grid having a polygonal external outline, the fuel pencils containing uranium enriched in the isotope 235, and being devoid of plutonium before the use of the assembly in the reactor, **characterised in that** the pencils are distributed in at least:
- a first central group formed by fuel pencils having a first nuclear reactivity (e1) and possibly pencils containing a neutronic poison, and
- an external peripheral layer (13) of fuel pencils which are distributed in:
- a second group of fuel pencils extending along the faces (15) of the external outline of the grid and having a second nuclear reactivity (e2) strictly lower than the first nuclear reactivity, and
- a third group of fuel pencils disposed at the corners of the external outline of the grid and having a third nuclear reactivity (e2) strictly lower than the second nuclear reactivity.

2. The assembly according to Claim 1 wherein the second group extends, for each face (15) of the external outline of the grid of fuel pencils from one corner to the other of the face in question, and the third group only comprises fuel pencils disposed in the corners of the external outline of the grid of fuel pencils.

3. The assembly according to any of the preceding claims, wherein the different nuclear reactivities of the fuel pencils of the different groups are obtained by different masses of the uranium 235 in the fuel pencils.

4. The assembly according to Claim 3 wherein the different nuclear reactivities of the fuel pencils of the different groups are obtained by different enrichments (e1, e2, e3) of the fuel pencils in the uranium 235.

5. The assembly according to Claim 1 or 2 taken in combination with Claim 4 wherein:
- the pencils of the first group have a first enrichment e1 in the uranium 235,
- the pencils of the second group have a second enrichment e2 in the uranium 235 strictly lower than the first enrichment e1, and
- the pencils of the third group have a third enrichment in the uranium 235 strictly lower than the second enrichment e3.

6. The assembly according to Claim 5, wherein the second enrichment e2 is between e1-0.8% and e1-0.2%.

7. The assembly according to Claim 5 or 6, wherein the third enrichment e3 is between e1-1.8% and e1-0.6%.

8. The assembly according to any of Claims 5 to 7, wherein the first enrichment e1 is between 3% and 6%.

9. The assembly according to any of the preceding claims, wherein the grid of fuel pencils (3) has a square external contour.

10. A nuclear reactor core, **characterised in that** it comprises fuel assemblies (3) according to any of the preceding claims.

## Patentansprüche

1. Brennstoffbaugruppe (3) für einen Druckwasser-Kernreaktor des Typs, der in den Knoten eines im Wesentlichen regelmäßigen Netzes mit polygonaler Außenkontur angeordnete Brennstifte umfasst, wobei die Brennstifte mit Isotop 235 angereichertes Uran und kein Plutonium vor dem Einsatz der Baugruppe im Reaktor enthalten, **dadurch gekennzeichnet, dass** die Brennstifte aufgeteilt sind in zumindest:
eine erste mittlere Gruppe, die von Brennstiften mit einer ersten Kernreaktivität (e1) und gegebenenfalls von ein Neutronengift enthaltenden Brennstiften gebildet ist, und
eine äußere Umfangsschicht (13) von Brennstiften, die aufgeteilt sind in:
eine zweite Gruppe von Brennstiften, die sich entlang den Flächen (15) der Außenkontur des Netzes erstrecken und eine zweite Kernreaktivität (e2) strikt unter der ersten Kernreaktivität aufweisen, und
eine dritte Gruppe von Brennstiften, die in den Ecken der Außenkontur des Netzes angeordnet sind und eine dritte Kernreaktivität (e3) strikt unter der zweiten Kernreaktivität aufweisen.

2. Baugruppe nach Anspruch 1, bei der sich die zweite Gruppe in jeder Fläche (15) der Außenkontur des Netzes der Brennstifte von einer Ecke zur anderen der jeweiligen Fläche erstreckt und die dritte Gruppe nur die Brennstifte umfasst, die in den Ecken der Außenkontur des Netzes der Brennstifte angeordnet sind.

3. Baugruppe nach einem der vorhergehenden Ansprüche, bei der die unterschiedlichen Kernreaktivitäten der Brennstifte der verschiedenen Gruppen durch unterschiedliche Massen von Uran 235 in den Brennstiften gebildet sind.

4. Baugruppe nach Anspruch 3, bei der die unterschiedlichen Kernreaktivitäten der Brennstifte der verschiedenen Gruppen durch unterschiedliche Anreicherungen (e1, e2, e3) der Brennstifte mit Uran 235 gebildet sind.

5. Baugruppe nach Anspruch 1 oder 2, in Verbindung mit Anspruch 4, bei der:
die Brennstifte der ersten Gruppe eine erste Anreicherung (e1) mit Uran 235 aufweisen,
die Brennstifte der zweiten Gruppe eine zweite Anreicherung (e2) mit Uran 235 strikt unter der ersten Anreicherung (e1) aufweisen und
die Brennstifte der dritten Gruppe eine dritte Anreicherung mit Uran 235 strikt unter der zweiten Anreicherung (e3) aufweisen.

6. Baugruppe nach Anspruch 5, bei der die zweite Anreicherung (e2) zwischen e1-0,8 % und e1-0,2 % liegt.

7. Baugruppe nach Anspruch 5 oder 6, bei der die dritte Anreicherung (e3) zwischen e1-1,8 % und e1-0,6 % liegt.

8. Baugruppe nach einem der Ansprüche 5 bis 7, bei der die erste Anreicherung (e1) zwischen 3 % und 6 % liegt.

9. Baugruppe nach einem der vorhergehenden Ansprüche, bei der das Netz (3) der Brennstifte eine quadratische Außenkontur aufweist.

10. Reaktorkern, **dadurch gekennzeichnet, dass** er Brennstoffbaugruppen (3) nach einem der vorhergehenden Ansprüche umfasst.
